# DEMANDE DE BREVET EUROPEEN

(11) **EP 1 319 564 A1**
(43) Date de publication de la demande: **18.06.2003**
(21) Numéro de dépôt: 02292775.0
(22) Date de dépôt: 07.11.2002
(51) Int. Cl.: B60T 7/06

(54) **Pedale pour vehicule automobile**

(30) Priorité: 12.12.2001 FR 0116018
(71) Demandeur: Peugeot Citroen Automobiles SA, 92200 Neuilly sur Seine (FR)
(72) Inventeur: Darmon, Francois, 94550 Chevilly-Larue (FR)
(74) Mandataire: Robert, Jean-François

(57) **Abrégé**

L'invention se rapporte à une pédale (1) pour véhicule automobile comprenant un corps de section sensiblement en U et comportant au moins un évidement (19), une tige (7) reliant mécaniquement ladite pédale à un premier système fonctionnel (6) et un moyen d'actionnement (11) commandé par le rapprochement entre ladite pédale et un deuxième système fonctionnel (2) caractérisé en ce qu'elle comporte de plus un dispositif mécanique (8) qui, piloté par ledit moyen d'actionnement, permet le passage de ladite tige au travers dudit au moins un évidement du corps de pédale de manière à désolidariser la pédale (1) par rapport à la tige (7).

L'invention trouve son application notamment dans le domaine des crashtests.

## Description

L'invention se rapporte à une pédale pour véhicule automobile et plus particulièrement une telle pédale raccordée à un système de freinage.

Les constructeurs automobiles s'attachent à constamment améliorer la sécurité de leurs véhicules. Concernant la sécurité dans l'habitacle, des coussins gonflables ou des pédaliers déformables sont notamment apparus. Toutes les améliorations sont généralement bien ciblées et sont régulièrement réévaluées en relation avec les réglementations en vigueur édictant des normes toujours plus sévères.

Concernant le domaine des pédaliers, des améliorations sont à apporter car la collision d'un véhicule lancé à haute vitesse peut être si forte qu'elle peut occasionner une déformation de la structure du véhicule au point de pousser l'ensemble du pédalier vers l'intérieur de l'habitacle.

Ainsi, concernant les pédales de frein, il est commun d'utiliser une tige pour relier la pédale de frein à un amplificateur de freinage. La tige se translate sur un faible débattement dans l'amplificateur de freinage lequel va transformer et envoyer l'instruction du conducteur au système de freinage.

Par conséquent, dans le cas où le conducteur serait en train de freiner lors d'une collision, il peut être gravement blessé aux membres inférieurs si le pédalier est poussé vers l'habitacle. En effet, le faible débattement de ladite tige ne va pas pouvoir compenser le déplacement du pédalier.

Le but de la présente invention est de pallier tout ou partie les inconvénients cités précédemment en proposant une pédale qui comprend des moyens de sécurité aptes à être activés permettant à ladite pédale d'être indépendante par rapport à un mouvement de déformation du tablier et ainsi d'atténuer les lésions des membres inférieurs du conducteur.

A cet effet, l'invention se rapporte à une pédale pour véhicule automobile comprenant un corps de section sensiblement en U et comportant au moins un évidement, une tige reliant mécaniquement ladite pédale à un premier système fonctionnel et un moyen d'actionnement commandé par le rapprochement entre ladite pédale et un deuxième système fonctionnel caractérisé en ce qu'elle comporte de plus un dispositif mécanique qui, piloté par ledit moyen d'actionnement, permet le passage de ladite tige au travers dudit au moins un évidement du corps de pédale de manière à désolidariser la pédale par rapport à la tige.

Avantageusement, le dispositif mécanique, selon l'invention, comporte une rotule en prolongement d'une extrémité de ladite tige, un siège de rotule composé de deux pièces symétriques venant recouvrir partiellement ladite rotule, une pièce principale entourant l'ensemble rotule - siège de rotule et comportant au moins un évidement apte à y laisser glisser la tige, et des moyens de fixation de ladite pièce principale contre la pédale permettant de transmettre le mouvement de la pédale à la tige et inversement. Cela permet lorsque le dispositif n'est pas activé d'utiliser la pédale de manière conventionnelle.

Selon l'invention, lesdits moyens de fixation comportent, de manière avantageuse, au moins une pièce dont une première partie est solidarisée à la pédale et dont une deuxième est fixée temporairement sur ladite pièce principale de manière à ce que, sous la commande du moyen d'actionnement, la pièce principale autorise aux dites deux pièces symétriques de s'écarter pour laisser l'ensemble rotule - tige passer au travers dudit au moins un évidement de la pédale. Par ce dispositif mécanique simple, le mouvement de la pédale et celui de la tige peuvent être découplés.

De manière avantageuse, le moyen d'actionnement est, selon l'invention, une plaque sensiblement en L qui, accolée à la pièce principale du dispositif mécanique, comporte un évidement apte à laisser passer l'ensemble rotule - tige et sert de butée contre le deuxième système fonctionnel de manière à pousser ladite pièce principale lors du rapprochement de la pédale et dudit deuxième système fonctionnel.

Avantageusement selon l'invention, les moyens de fixation comportent deux pièces allongées de section sensiblement en L.

Selon l'invention, le premier système fonctionnel comporte avantageusement un système de freinage du véhicule.

Le deuxième système fonctionnel, avantageusement, comporte, selon l'invention, le support de colonne de direction.

D'autres particularités et avantages apparaîtront à la lecture de la description ci-après faite en référence aux figures dans lesquelles :
- la figure 1 est une vue de côté de la pédale selon l'invention ;
- La figure est une vue en perspective de la pièce principale du dispositif mécanique selon l'invention ;
- la figure 3 est une section du dispositif mécanique de la pédale dans son état non actionné.
- la figure 4 une section du dispositif mécanique ayant été actionné, le siège de rotule n'étant pas désolidarisé.
- la figure 5 une section du dispositif mécanique ayant été actionné, le siège de rotule étant désolidarisé.

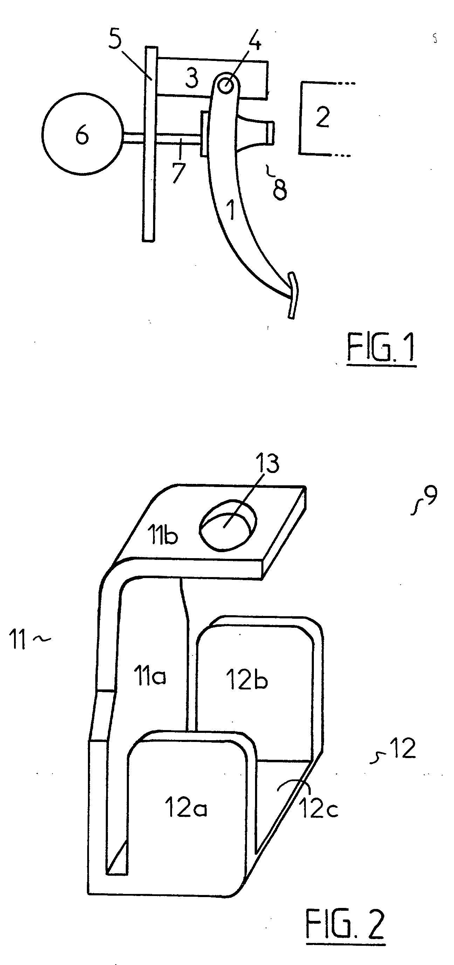

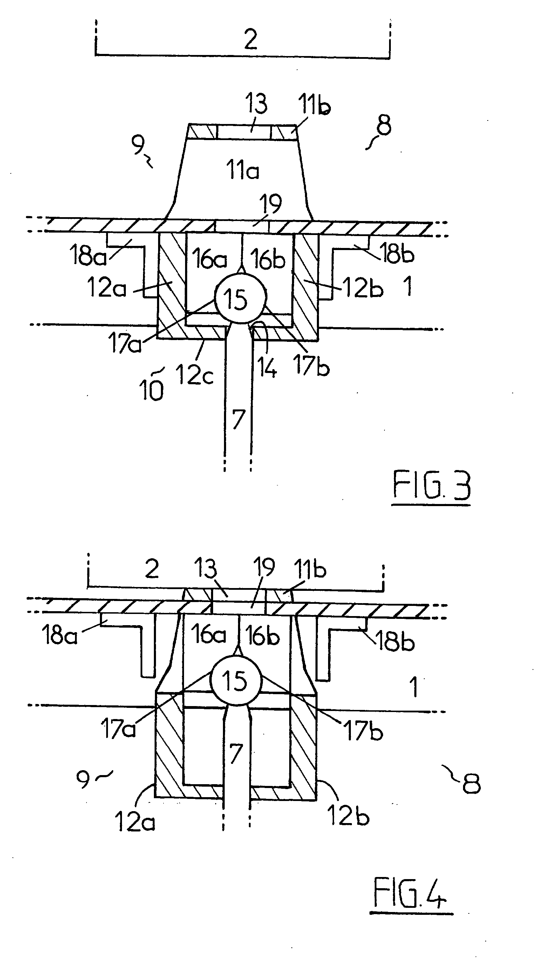

Dans l'exemple illustré à la figure 1, on peut voir que la pédale 1 comporte dans son entourage principalement un support de colonne de direction 2, au moins un flasque 3 supportant l'axe de rotation 4 de la pédale 1 et étant solidaire du tablier 5, un système de freinage 6 relié à la pédale 1 par la tige 7 et un dispositif mécanique 8. La pédale 1, sensiblement de section en U, comporte également un évidement 19 sur une de ces faces comme illustré aux figures 3 à 5.

Aux figures 2 et suivantes, on s'aperçoit que ledit dispositif mécanique 8 comporte essentiellement une pièce principale 9 et un ensemble rotule - siège de rotule 10. Ladite pièce principale est composée d'une première pièce en L 11 et d'une deuxième pièce en U 12, les deux pièces étant solidaires l'une de l'autre.

Ainsi, dans l'exemple illustré à la figure 2, la première pièce en L 11 comporte une partie verticale 11a et une partie horizontale 11b comportant un trou 13. la deuxième pièce en U 12 comprend deux parties verticales 12a, 12b et une partie horizontale 12c laquelle comporte également un trou 14 (visible uniquement aux figures suivantes). Ces deux pièces sont reliées entre elles par la solidarisation de la partie 11a avec la partie 12c.

Dans l'exemple illustré aux figures 3 à 5, on peut voir l'ensemble rotule - siège de rotule 10 selon l'invention. La rotule 15 est fixée à la tige 7, ce qui est rendu possible par le passage de ladite tige au travers du trou 14 situé dans la partie 12c de la pièce principale 9.

Le siège de rotule 16 est composé de deux parties symétriques 16a, 16b comportant des évidements 17a, 17b destinés à recevoir la rotule 15. Ces deux parties symétriques permettent de recouvrir sensiblement aux trois quarts ladite rotule. Ainsi quand les deux parties symétriques 16a, 16b sont en contact l'une avec l'autre, les mouvements de la rotule 15, de la tige 7 et du siège de rotule 10 sont totalement liés.

Dans l'exemple illustré à la figure 3, les deux parties verticales 12a, 12b permettent de maintenir l'une contre l'autre les deux parties symétriques 16a, 16b. De cette manière, la rotule 15 et le siège de rotule 16 sont totalement liés.

Dans l'exemple illustré aux figures 3 à 5, deux fixations 18a et 18b, en forme de barres en L, sont utilisées pour lier le mouvement de la tige 7 par rapport à celui de la pédale 1. En effet, chaque fixation 18a, 18b relie la pédale 1 à une des parties verticales 12a, 12b de la pièce principale 9. De cette manière, le dispositif mécanique 8 est intercalé entre la tige 7 et la pédale 1 sans modifier l'utilisation de cette dernière, car le dispositif mécanique 8 n'est utile que lors de la déformation du tablier 5 pour préserver les membres inférieurs du conducteur du véhicule.

Ainsi, les figures 3 à 5 présentent différentes configurations dudit dispositif mécanique 8 en fonction de la déformation du tablier 5 et par conséquent du rapprochement, dans l'exemple illustré, de la partie en L 11 de la pièce principale 9 par rapport au support de colonne 2.

Tout d'abord dans l'exemple illustré à la figure 3, le dispositif mécanique 8 est dans sa position dite non activée. Ledit support de colonne est en vis-à-vis avec la partie 11b de la pièce principale 9 mais il n'est pas en contact avec elle. Par conséquent, la pédale 1 est utilisée en vue de transmettre à la tige 7 la commande du conducteur.

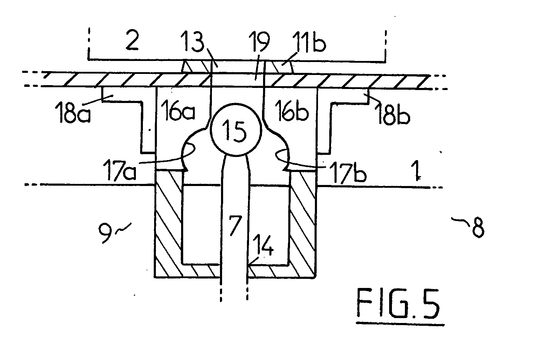

Dans l'exemple illustré à la figure 4, Le dispositif mécanique 8 a été activé. Selon l'invention, les fixations 18a et 18b montées sur respectivement la partie 12a et la partie 12b de la pièce principale 9 sont temporaires. Cela signifie qu'au dessus d'une contrainte prédéterminée exercée sur la pièce principale 9, les fixations 18a et 18b se désolidarisent et donc autorisent le mouvement de ladite pièce principale par rapport à la pédale 1.

Dans l'exemple de la figure 4, la déformation du tablier 5 a induit, par les flasques 4, un rapprochement de la pédale 1 par rapport au support de colonne 2 qui lui est fixe. Le rapprochement est tel que la partie 11b a rencontré et donc buté contre ledit support de colonne.

Cela a entraîné la désolidarisation du dispositif mécanique 8 par rapport à la pédale 1 et également un déplacement relatif de la pièce principale 9 par rapport à ladite pédale correspondant à une compensation du rapprochement entre la pédale 1 et le support de direction 2.

En effet, la pièce principale 9, n'étant plus solidaire de la pédale 1, glisse contre cette dernière tout en étant guidée par les bordures des fixations 18a et 18b. Au stade de l'exemple illustré de la figure 4, la pédale 1 est en contact avec la partie 11b, lui même en contact avec le support de colonne de direction 2.

Si le tablier 5 continue à se déformer, une deuxième phase va être initiée par le dispositif mécanique 8. En effet, quand la pédale 1 est en contact avec la partie 11b, ledit déplacement relatif de la pièce principale 9 est tel que les deux parties verticales 12a, 12b de ladite pièce principale n'encadrent plus les deux parties symétriques 16a, 16b du siège de rotule 16. Par conséquent si le rapprochement continu, la contrainte exercée par le très faible débattement de la tige 7, qui est fixée au système de freinage 6, va obliger aux deux parties symétriques de s'écarter et donc de laisser glisser la rotule 15 le long des évidements 17a et 17b, puis le long d'une des faces de chacune desdites parties symétriques comme illustré à la figure 5.

Sous l'effet d'un choc très violent contre le véhicule, le déplacement du tablier peut être si fort que l'invention permet également à la rotule 15 de passer au travers du trou 19 de la pédale et même celui 13 de la pièce principale 9. Ainsi dans le cas où le conducteur serait en train de freiner lors d'un impact violent, le déplacement du pédalier dû à la déformation du tablier 5 rendra la pédale 1 indépendante par rapport à la tige 7 quasi-fixe reliée au système de freinage 6 et donc préservera le membre inférieur étant en train d'exercer une contrainte sur ladite pédale.

Bien entendu, la présente invention ne se limite pas à l'exemple illustré mais est susceptible de diverses variantes et modifications qui apparaîtront à l'homme de l'art. En particulier, on peut imaginer une géométrie différente du support de colonne 2 ou même un système fonctionnel différent d'un support de colonne de direction. Il peut également être ajouter les renforts permettant d'éviter que la partie 11b se recourbe sur la partie 11a. Enfin, le siège de rotule 16 peut être de géométrie différente.

## Revendications

1. Pédale (1) pour véhicule automobile comprenant un corps de section sensiblement en U et comportant au moins un évidement (19), une tige (7) reliant mécaniquement ladite pédale à un premier système fonctionnel (6) et un moyen d'actionnement (11) commandé par le rapprochement entre ladite pédale et un deuxième système fonctionnel (2) **caractérisé en ce qu'**elle comporte de plus un dispositif mécanique (8) qui, piloté par ledit moyen d'actionnement, permet le passage de ladite tige au travers dudit au moins un évidement du corps de pédale de manière à désolidariser la pédale (1) par rapport à la tige (7).

2. Pédale (1) selon la revendication 1, **caractérisé en ce que** le dispositif mécanique (8) comporte une rotule (15) en prolongement d'une extrémité de ladite tige, un siège de rotule (16) composé de deux pièces symétriques (16a, 16b) venant recouvrir partiellement ladite rotule, une pièce principale (9) entourant l'ensemble rotule - siège de rotule (10) et comportant au moins un évidement (14) apte à y laisser glisser la tige (7), et des moyens de fixation (18a, 18b) de ladite pièce principale contre la pédale (1) permettant de transmettre le mouvement de la pédale (1) à la tige (7) et inversement.

3. Pédale (1) selon la revendication 2, **caractérisé en ce que** lesdits moyens de fixation comportent au moins une pièce dont une première partie est solidarisée à la pédale (1) et dont une deuxième est fixée temporairement sur ladite pièce principale de manière à ce que, sous la commande du moyen d'actionnement (11), la pièce principale (9) autorise aux dites deux pièces symétriques de s'écarter pour laisser l'ensemble rotule (15) - tige (7) passer au travers dudit au moins un évidement de la pédale (1).

4. Pédale (1) selon l'une des revendications précédentes, **caractérisé en ce que** le moyen d'actionnement (11) est une plaque sensiblement en L qui, accolée à la pièce principale (9) du dispositif mécanique (8), comporte un évidement (13) apte à laisser passer l'ensemble rotule (15) - tige (7) et sert de butée contre le deuxième système fonctionnel (2) de manière à pousser ladite pièce principale lors du rapprochement de la pédale (1) et dudit deuxième système fonctionnel.

5. Pédale selon l'une des revendications 2 à 4, **caractérisé en ce que** les moyens de fixation (18a, 18b) comportent deux pièces allongées de section sensiblement en L.

6. Pédale selon l'une des revendications précédentes, **caractérisé en ce que** le premier système fonctionnel (6) comporte un système de freinage du véhicule.

7. Pédale selon l'une des revendications précédentes, **caractérisé en ce que** le deuxième système fonctionnel (2) comporte le support de colonne de direction.
